# FASCICULE DE BREVET EUROPEEN

(11) **EP 4 098 020 B1**
(45) Date de publication et mention de la délivrance du brevet: **30.04.2025**
(21) Numéro de dépôt: 21701339.0
(22) Date de dépôt: 28.01.2021
(51) Int. Cl.: H04W 28/02, H04W 72/56

(54) **PROCÉDÉ DE CONSTRUCTION DE RÈGLES D'ÉCHANGES DANS UNE ARCHITECTURE D'ÉCHANGES DE FLUX DE DONNÉES DANS UNE FORMATION D'ENGINS MOBILES ET MODULE CENTRAL ASSOCIÉ**
VERFAHREN ZUR KONSTRUKTION VON AUSTAUSCHREGELN IN EINER ARCHITEKTUR ZUM AUSTAUSCHEN VON DATENSTRÖMEN IN EINER FORMATION VON MOBILEN MASCHINEN UND ZUGEHÖRIGES ZENTRALES MODUL
METHOD FOR CONSTRUCTING EXCHANGE RULES IN AN ARCHITECTURE FOR EXCHANGING DATA STREAMS IN A FORMATION OF MOBILE MACHINES, AND ASSOCIATED CENTRAL MODULE

(30) Priorité: 28.01.2020 FR 2000813
(43) Date de publication de la demande: 07.12.2022
(73) Titulaire: NAVAL Group, 75015 Paris (FR)
(72) Inventeur: HAIRION, David, 83190 Ollioules (FR); SIMON, Pierre, 84240 La Tour d'Aigues (FR)
(74) Mandataire: Lavoix
(86) Numéro de dépôt international: PCT/EP2021/051917
(87) Numéro de publication internationale: WO 2021/151975

(56) Documents cités:
- EP-A1- 2 640 004
- WO-A1-03/107607
- FR-A1- 2 961 367
- US-A1- 2018 213 434

## Description

La présente invention concerne un procédé de construction de règles d'échanges dans une architecture d'échanges de flux de données dans une formation d'engins mobiles.

La présente invention concerne également un module central mettant en œuvre un tel procédé de construction.

La formation d'engins mobiles est notamment composée de navires, par exemple de navire de guerre.

De manière connue en soi, de tels engins sont propres à échanger des données numériques entre eux et éventuellement avec un centre de commandement via des liaisons de communication établies entre eux.

Différentes méthodes d'échange des données sont décrites par exemple dans les documents FR 2 961 367 A1 (qui divulgue le routage de flux sensibles et non sensibles -de sécurité- ayant des contraintes sur la QoS avec l'utilisation de chiffrement et de règles de communication établies, dont les flux sont classés sur la base d'une QoS allouée sur la base de leur priorité, de leurs besoins en bande passante et en débit binaire et d'autres contraintes -par exemple, retard- et, en fonction de la sensibilité du contenu, certains paquets sont soumis à un routage prioritaire par rapport à d'autres selon une réservation de ressources en associant le niveau de priorité d'un flux à un besoin minimal en bande passante), WO 03/107607 A1 (dont, afin de fournir un "service garanti" avec une QoS telle que le retard de bout en bout pour un flux de données ne dépasse pas une limite supérieure, le flux de données est contrôlé en collectant ses motifs de trafic bruts et en passant les informations collectées à un moteur de spécification de trafic basé sur des mesures MBTS qui convertit les données de motif en spécifications de flux rapportées à un fournisseur de service de QoS pour le contrôle de trafic de paquets de données d'un point précédent A au point suivant B dans le réseau), EP 2 640 004 A1 (concernant le transfert de données le long d'un chemin impliquant plusieurs nœuds -modules de commande- qui appliquent leurs règles de transfert -basées sur des paramètres à appliquer- au flux de données à transmettre, dont les règles de transfert sont adaptées par un premier module de contrôle à l'itinéraire de réseau complet sur la base d'informations provenant d'un second module de contrôle - suivant-) ou US 2018/213434 A1 (qui vise sur l'admissibilité des flux de données selon la disponibilité de bout en bout de débit garanti).

Les données numériques peuvent être de différentes natures.

Ainsi, par exemple, ces données peuvent comprendre des flux de données relatives aux échanges téléphoniques entre au moins certains des engins. Ces flux de données, bien que généralement peu volumineux, doivent être transmis en priorité afin d'assurer la qualité de service.

Les données échangées peuvent comprendre également des données stratégiques par exemple relatives au combat en cours. Il est clair que ces données doivent être transmises non-seulement avec une grande priorité mais également avec une bande passante garantie.

Cela permet notamment de déterminer des latences maximales dans les transmissions de ces données et de configurer de manière adaptée les systèmes de combat correspondants.

Les données échangées peuvent comprendre également des données de confidentialités différentes qui doivent être chiffrées afin d'éviter leur interception par une partie tierce.

Enfin, les données échangées peuvent comprendre également des données de divertissement par exemple des personnes se trouvant à bord des engins mobiles. Ces données, bien que peu prioritaires, peuvent présenter des débits importants lorsqu'il s'agit notamment des données multimédia.

Les liaisons utilisables pour transmettre ces différents types de données sont notamment des liaisons radio et présentent des bandes passantes limitées.

En outre, la formation elle-même d'engins mobiles et les conditions de leur opération peuvent évoluer rapidement.

Ainsi, un engin mobile servant de relai de transmission des données peut quitter la formation et un autre engin peut la rejoindre.

En outre, chaque engin mobile est généralement capable de modifier ses conditions opérationnelles rapidement en passant par exemple d'un mode de surveillance à un mode d'action. Cela change également la nature des données échangées par un tel engin.

On conçoit alors que la gestion de transmission des données au sein d'une formation d'engins mobiles présente de nombreuses difficultés qui n'ont pas été résolues à ce jour par les méthodes et systèmes existants.

La présente invention a pour objet de résoudre ces difficultés et en particulier, de proposer une gestion de données dans une formation d'engins mobiles permettant non-seulement d'assurer des échanges fiables et efficaces au sein de cette formation mais également des échanges pouvant évoluer rapidement en fonction de la composition de la formation et des conditions opérationnelles de chacun des engins mobiles.

À cet effet, l'invention a pour objet un procédé de construction conforme à la revendication 1.

Suivant d'autres aspects avantageux de l'invention, le procédé de construction de règles d'échanges selon l'invention comprend une ou plusieurs caractéristiques des revendications 2 à 11.

La présente invention a également pour objet un module central pour une architecture d'échanges de flux de données dans une formation d'engins mobiles, l'architecture d'échanges comprenant une pluralité de plateformes de communication et des liaisons raccordant ces plateformes de communication entre elles, chaque plateforme de communication étant associée à l'un des engins mobiles ou à un centre de commandement.

Le module central comprend des moyens techniques configurés pour mettre en œuvre le procédé de construction tel que précédemment décrit.

Ces caractéristiques et avantages de l'invention apparaîtront à la lecture de la description qui va suivre, donnée uniquement à titre d'exemple limitatif, et faite en référence aux dessins annexés sur lesquels :
- [Fig 1] la figure 1 est une vue schématique d'une architecture d'échanges de flux de données dans une formation d'engins mobiles comprenant une pluralité de plateformes de communication, chaque plateforme de communication étant associée à un engin mobile ou à un centre de commandement ;
- [Fig 2] la figure 2 est une vue schématique de l'une des plateformes de communication de la figure 1 avec des liaisons associées à cette plateforme, la plateforme comprenant un module central et une pluralité de modules de gestion d'échanges ;
- [Fig 3] la figure 3 est une vue schématique en détail de l'un des modules de gestion d'échanges de la figure 2 ;
- [Fig 4] [Fig 5] les figures 4 et 5 sont différentes vues illustrant le fonctionnement du module de gestion d'échanges de la figure 4 ;
- [Fig 6] la figure 6 est un organigramme d'un procédé de construction de règles d'échanges mis en œuvre par le module central de la figure 2 ;
- [Fig 7] la figure 7 est une vue simplifiée illustrant la mise en œuvre du procédé de la figure 6 ; et
- [Fig 8] la figure 8 est un organigramme d'un procédé de construction et de maintien de conduits mis en œuvre par le module central de la figure 2.

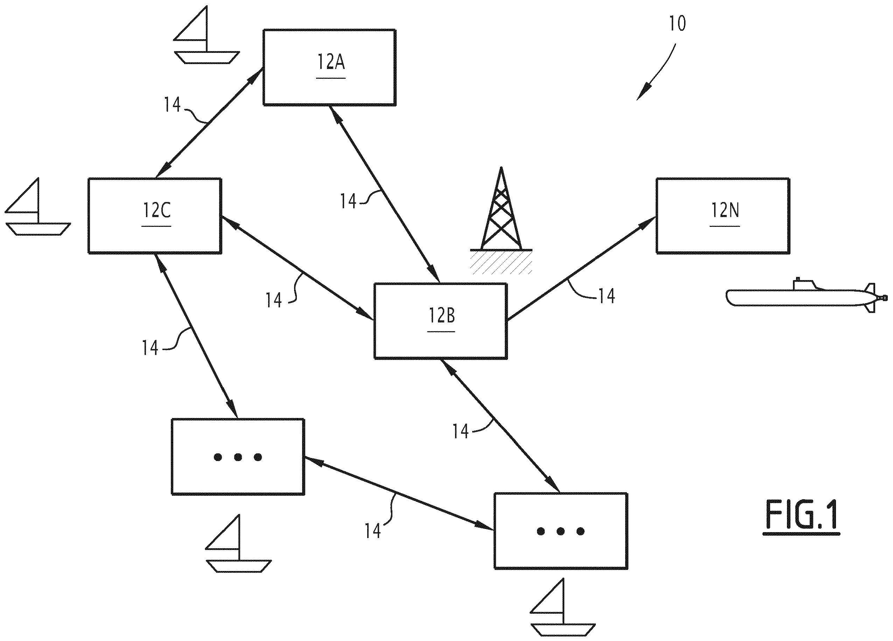

On a en effet illustré sur la figure 1 une architecture d'échanges 10 de flux de données dans une formation d'engins mobiles.

Cette architecture d'échanges 10 comprend une pluralité de plateformes de communication 12A à 12N et des liaisons 14 raccordant au moins certains couples de ces plateformes.

Les liaisons 14 sont formées par des moyens de transmission connus en soi.

Ainsi, chaque liaison 14 est formée entre un couple de plateformes 12A à 12N en utilisant un ou plusieurs moyens de transmission connus en soi.

Ces moyens de transmission sont éventuellement sans fil de même nature ou de natures différentes et sont par exemple choisis en fonction de la nature des engins mobiles. Ces moyens de transmission peuvent aussi être, au moins en partie, filaires lorsque par exemple la ou les plateformes correspondantes sont immobilisées au moins temporairement.

De préférence, chaque moyen de transmission est un moyen de transmission radio ou optique, passant éventuellement par un système de satellites et/ou un système d'aéronefs ou d'aérostats ou d'autres types d'engins mobiles ne faisant pas partie de ladite formation d'engins mobiles.

Chaque liaison 14 présente un débit de transmission de données, appelé également capacité de transmission de cette liaison. Ce débit est mesurable.

Chaque plateforme de communication 12A à 12N est associée à l'un des engins mobiles de la formation ou à un centre de commandement.

Dans l'exemple décrit, chaque engin mobile présente un navire, par exemple un navire de surface ou un navire submersible. La plateforme de communication associée à un tel engin est donc embarquée à bord de celui-ci.

De manière générale, un engin mobile peut présenter tout autre engin, par exemple un engin terrestre ou un aéronef ou encore un engin spatial.

Par « centre de commandement », on entend par exemple un centre de commandement terrestre comportant alors la plateforme de communication qui lui est associée.

Selon d'autres exemples de réalisation, le centre de commandement peut être embarqué également à bord d'un engin mobile, par exemple de même nature que les autres engins ou alors d'une nature différente.

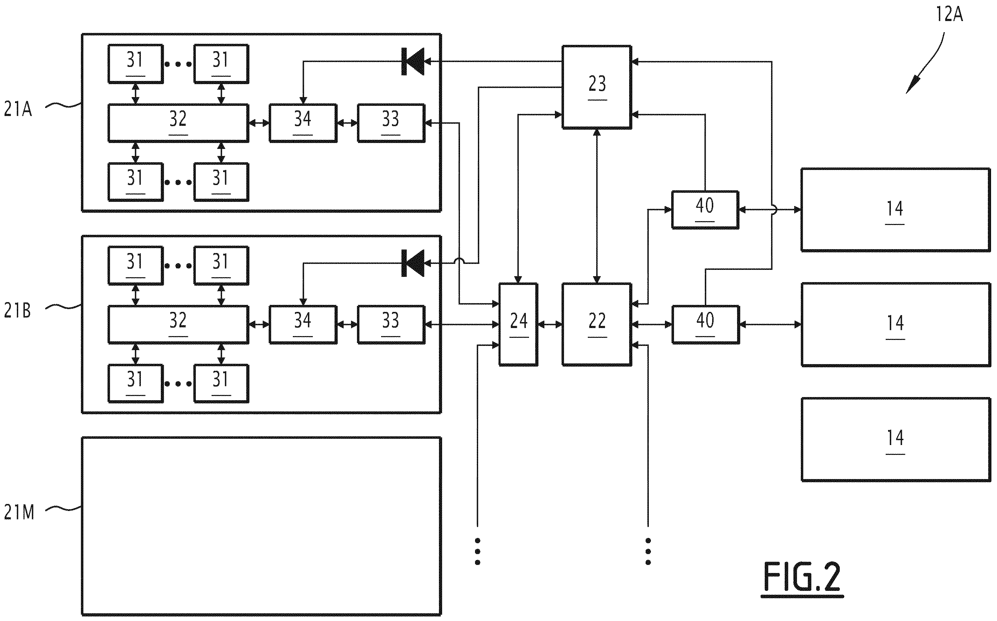

Les plateformes de communication 12A à 12N sont par exemple sensiblement analogues entre elles. Ainsi, par la suite, seule par exemple la plateforme de communication 12A sera décrite en détail en référence à la figure 2.

Ainsi, comme cela est visible sur cette figure 2, la plateforme de communication 12A comprend une pluralité de domaines de sécurité 21A à 21M, un commutateur 22, un module central 23 et un module de gestion global 24. L'ensemble des domaines de sécurité 21A à 21M d'une même plateforme de communication forment un système de communication de cette plateforme.

Chaque domaine de sécurité 21A à 21M est apte à produire des flux de données d'un niveau de confidentialité propre à ce domaine et à recevoir des flux de données du niveau de confidentialité correspondant.

Pour ce faire, chaque domaine de sécurité comprend une pluralité de clients 31, un réseau informatique 32 raccordant ces clients 31 entre eux et un chiffreur 33 permettant de chiffrer des données sortantes de ce domaine selon leur niveau de confidentialité et de déchiffrer les données entrantes dans ce domaine, selon des techniques connues en soi.

Le réseau informatique 32 est par exemple un réseau filaire de type LAN connu en soi.

Chaque client 31 présente par exemple un terminal d'accès utilisable par un utilisateur ou un système embarqué.

Ainsi, chaque client 31 est apte à produire des données numériques sous la forme de flux de données et à recevoir des données numériques également sous la forme de flux numériques.

Chaque flux de données comprend un identifiant permettant d'identifier de manière unique le flux correspondant. Cet identifiant est par exemple déterminé par le champ connu sous la nom anglais de « *Differentiated Services Field* ». Dans ce cas, la valeur de ce champ présente une valeur de type DSCP, également connue en soi.

Selon l'invention, chaque domaine de sécurité 21A à 21M comprend en outre un module de gestion local 34 raccordant le réseau informatique 32 au chiffreur 33 et permettant de gérer localement des flux de données non-chiffrés comme cela sera expliqué plus en détail par la suite.

Le module de gestion local 34 de chaque domaine de sécurité 21A à 21M est par ailleurs raccordé au module central 23 via un lien unidirectionnel permettant à ce module central 23 de transmettre des données vers ce module de gestion local 34 de manière unidirectionnelle.

Le chiffreur 33 de chaque domaine de sécurité 21A à 21M est raccordé au commutateur 22 via le module de gestion global 24.

Le module de gestion global 24 permet de gérer des flux de données entrants ou sortants de manière analogue à celle des modules de gestion locaux 34.

Toutefois, contrairement à ceux-ci, le module de gestion global 24 gère des flux chiffrés qui sont issus ou destinés à des différents domaines de sécurité.

Le module de gestion global 24 sera également expliqué plus en détail par la suite.

Le commutateur 22 permet de raccorder le module de gestion global 24 aux liaisons 14 associées à la plateforme de communication 12A.

En particulier, ce commutateur 22 permet de transmettre au module de gestion global 24 des flux de données reçus de chacune des liaisons 14. Il permet en outre de transmettre chaque flux de données sortant de la plateforme 12A à l'une des liaisons 14 conformément aux consignes déterminées par le module de gestion global 24.

Le commutateur 22 est raccordé en outre directement au module central 23 en permettant ainsi à ce module central 23 d'échanger des données avec les modules centraux 23 des autres plateformes de communication 12B à 12N sans passer par le module de gestion global correspondant.

Finalement, avantageusement selon l'invention, le commutateur 22 est raccordé à chaque liaison 14 via un moyen de mesure 40 permettant de mesurer un débit réel de la liaison 14 correspondante.

Ces moyens de mesure 40 sont aptes à communiquer les débits réels mesurés au module central 23 via des liens prévus à cet effet.

Selon l'invention, le module central 23 permet d'établir des règles de gestion de l'ensemble des flux de données dans la plateforme de communication 12A par les modules de gestion locaux 34 et par le module de gestion global 24 en établissant un plan de communication pour cette plateforme.

En particulier, le plan de communication établi par le module central 23 permet de désigner parmi l'ensemble des flux de données gérés par la plateforme 12A, des flux de données devant être traités comme privilégiés.

Chaque flux privilégié est associé à sa spécification comprenant :
- un identifiant de ce flux ;
- une source de ce flux correspondant à la plateforme de communication destinée à produire ce flux, appelée également plateforme d'origine ;
- une destination de ce flux correspondant à la plateforme de communication destinées à recevoir ce flux, appelée également plateforme de destination ; et
- une qualité de service de ce flux.

En particulier, de manière connue en soi, la qualité de service comprend des conditions dans lesquelles ce flux doit être traité.

Ces conditions comprennent notamment des priorités relatives à ce flux, des latences ainsi que son débit de transmission.

Ce débit de transmission peut être fixe ou élastique.

En cas d'un débit élastique, celle-ci peut être défini par un débit minimal admissible, c'est-à-dire par un débit minimal avec lequel ce flux doit être transmis, et un débit idéal, c'est-à-dire un débit devant être accordé si des ressources correspondantes sont disponibles.

Ainsi, chaque plan de communication comprend une liste de spécifications de flux permettant ainsi de définir des flux privilégiés dont la qualité de service est garantie.

Pour définir un tel plan de communication, le module central 23 est apte à mettre en œuvre un procédé de construction de nouvelles règles d'échanges 100 qui sera expliqué en détail par la suite.

En particulier, en mettant en œuvre ce procédé 100, le module central 23 met en œuvre une négociation avec les modules centraux des autres plateformes de communication 12B à 12N afin d'assurer les débits réservés pour chacun des flux privilégiés et plus globalement, leur qualité de service.

En outre, lors de la mise en œuvre du procédé de construction de nouvelles règles d'échanges 100, le module central 23 est apte à mettre en œuvre également un procédé de construction et de maintien de conduits de transmission 200 permettant de réserver un conduit de transmission pour chaque famille de flux privilégiés.

Par « famille de flux privilégiés », on entend l'ensemble des flux privilégiés ayant une même source et une même destination.

En outre, par « conduit de transmission » pour une famille de flux, on entend un chemin de bout en bout déterminé pour chaque flux privilégié de cette famille sur lequel il est possible de réserver le débit demandé par la spécification de ce flux.

Un tel chemin passe donc par la source du flux privilégié correspondant, sa destination et lorsque la source et la destination ne sont pas raccordées par l'une des liaisons 14, par une ou plusieurs autres plateformes de communication, appelées alors plateformes de relai.

Chaque conduit de transmission est formé d'une pluralité de segments de conduit. Chaque segment de conduit correspond à un débit réservé sur la liaison 14 raccordant la source à la destination de la famille de flux associée, ou la source ou la destination à l'une des plateformes de relai ou deux plateformes de relai entre elles.

Ainsi, le débit de chaque segment de conduit est inférieur ou égal au débit total de la liaison 14 correspondant à ce segment.

De préférence, la somme des débits des segments de conduit passant sur une liaison est strictement inférieure au débit total de la liaison 14 correspondante. Dans ce cas, le débit restant présente alors un débit minimal réservé pour l'ensemble des flux non-privilégiés devant être transmis via cette liaison.

Enfin, comme cela sera démontré par la suite, les segments d'un même conduit présentent un débit réservé identique pour une même famille de flux. Ainsi, chaque conduit de transmission présente un débit garanti pour la famille de flux privilégiés correspondante.

Les modules de gestion locaux 34 et le module de gestion global 24 sont aptes à recevoir chaque plan de communication établi par le module central 23 et en utilisant ce plan de communication, à désigner ou à reconnaitre chaque flux privilégié afin d'assurer son émission conformément à ce plan de communication.

Les modules de gestion locaux 34 et le module de gestion global 24 sont aptes en outre à assurer l'émission des flux non-privilégiés selon une technique de meilleur effort connue sous la nom anglais de « *Best Effort ».*

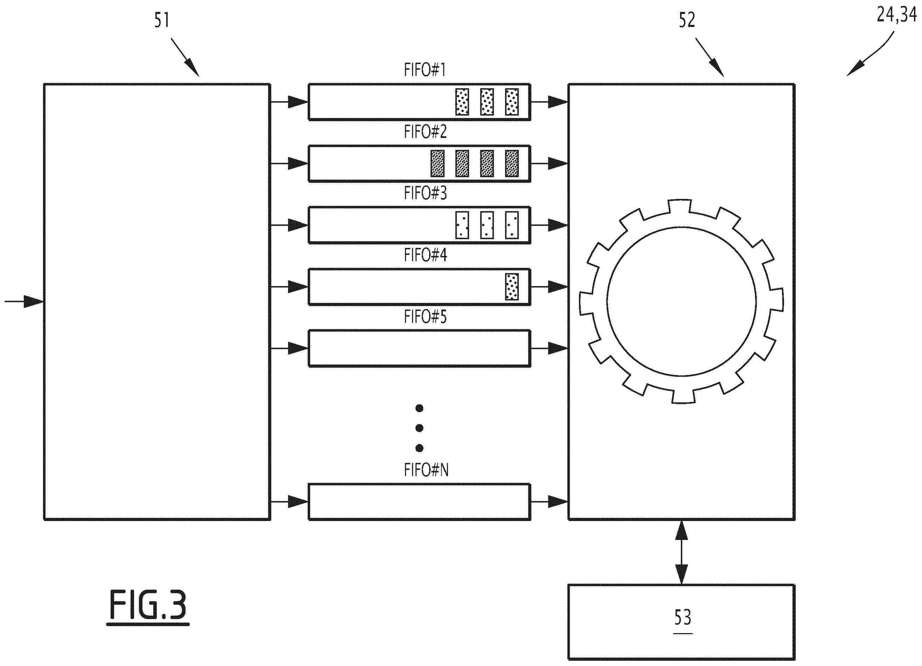

Ces modules de gestion 24, 34 sont définies sensiblement par une même structure que sera désormais expliquée en référence à la figure 3.

Ainsi, comme cela est visible sur cette figure 3, chacun des modules de gestion 24, 34 comprend un gestionnaire de files d'émission 51, un mécanisme de vidage 52 et un gestionnaire de vidage 53.

Le gestionnaire de files d'émission 51 est apte à associer à chaque flux de données à émettre une file d'attente.

Sur la figure 3, ces files d'attente sont désignées par les références FIFO#1 à FIFO#N, leur nombre est donc égal à N.

Le gestionnaire de files d'émission 51 est apte en outre à placer dans chaque file d'attente le flux de données correspondant sous une forme d'une pluralité de datagrammes.

Le mécanisme de vidage 52 définit une pluralité de sorties et apte à vider chaque file d'attente en émettant des datagrammes correspondants vers les liaisons 14 associées via une ou plusieurs sorties d'émission associées à cette file d'attente.

Comme illustré sur la figure 3, le fonctionnement du mécanisme de vidage 52 peut s'illustrer sous la forme d'un engrenage ayant P dents. Chaque dent correspond à une sortie définie par ce mécanisme 52.

Il est par ailleurs supposé qu'à chaque rotation complète de l'engrenage, une quantité Q d'octets à transmettre est définie. Cette quantité Q est définie en fonction du débit total des liaisons 14 associées à la plateforme 12A et présente donc un débit instantané envoyé par la plateforme 12A vers les liaisons 14.

Le gestionnaire de vidage 53 est apte à contrôler le fonctionnement du mécanisme de vidage 52.

En particulier, le gestionnaire de vidage 53 est apte à définir pour chaque file d'attente FIFO#1 à FIFO#N une fréquence de vidage et une capacité de vidage de cette file d'attente.

Pour définir la fréquence de vidage à une file d'attente, le gestionnaire de vidage 53 est apte à déterminer un nombre de sorties à associer à cette file d'attente. Plus ce nombre est élevé, plus souvent la file d'attente correspondante est « visitée » par l'engrenage lors d'une même rotation. Cela permet alors de vider plus rapidement cette file d'attente ce qui permet de traiter les priorités de différents flux.

Pour définir la capacité de vidage, le gestionnaire de vidage 53 est apte à associer à chaque sortie un crédit *qᵢ* correspondant donc au nombre d'octets pris lors d'une « visite » par l'engrenage de la file d'attente correspondante sachant qu'un datagramme ne peut pas être scindé. Si le crédit n'est pas suffisant pour sortir le datagramme, il sera traité au prochain tour, le crédit restant étant additionné à la dotation du prochain tour.

Il est donc clair que le nombre total des crédits *qᵢ* accordés par le gestionnaire 52 est inférieur ou égal à Q. Cela permet alors de régler le débit d'émission de chaque flux de données.

Selon l'invention, le gestionnaire de vidage 53 est apte à gérer dynamiquement la fréquence de vidage et la capacité de vidage afin de respecter la qualité de service de chaque flux privilégié et afin d'émettre chaque flux non-privilégié selon la technique de meilleur effort.

Pour cela, le gestionnaire de vidage 53 est à apte à recevoir le plan de communication en cours de la part du module central 23 et à désigner ou à reconnaitre chaque flux privilégié conformément à ce plan de communication.

Ainsi, chaque flux de données non-reconnu par le gestionnaire de vidage 53 conformément au plan de communication est traité comme un flux non-privilégié, c'est-à-dire selon la technique de meilleur effort.

La capacité de désigner ou de reconnaitre les flux privilégiés varie en fonction de l'emplacement du gestionnaire de vidage 53.

Ainsi, lorsque le gestionnaire de vidage 53 est situé dans l'un des modules de gestion locaux 34, il permet de désigner les flux privilégiés conformément au plan de communication non-seulement à partir de leur identifiant, c'est-à-dire de la valeur DSCP, mais également à partir de leur contenu non-chiffré.

Dans ce cas, le gestionnaire de vidage 53 est apte à distinguer parmi des flux de données un flux privilégié en utilisant le contenu non-chiffré de ce flux et à le marquer afin qu'il soit reconnu en tant qu'un flux privilégié par le module de gestion global 24 après le chiffrement de ce flux.

Ce marquage peut comprendre la modification de la valeur DSCP pour une valeur prédéterminée permettant de reconnaitre de manière sûre un flux privilégié après le chiffrage de celui-ci.

Cela est par exemple le cas lorsque seulement certain flux parmi un ensemble de flux ayant la même valeur DSCP doivent être traités comme des flux privilégiés.

Lorsque le gestionnaire de vidage 53 est situé dans le module de gestion global 24, il permet de reconnaitre les flux privilégiés conformément au plan de communication à partir de leur identifiant uniquement qui reste non-chiffré après le passage du flux par le chiffreur 33.

Lorsqu'il s'agit d'une valeur modifiée DSCP par l'un des modules de gestion locaux 34, le gestionnaire de vidage 53 est apte à reconnaitre cette valeur DSCP modifiée et à traiter donc ce flux comme un flux privilégié.

Comme indiqué précédemment, indépendamment de son emplacement, le gestionnaire de vidage 53 est apte à modifier dynamiquement la fréquence de vidage et la capacité de vidage de chaque file d'attente afin de respecter à chaque émission la qualité de service de chaque flux privilégié.

Avantageusement selon l'invention, le gestionnaire de vidage 53 est apte à attribuer les crédits *qᵢ* de manière dynamique en fonction du chargement de chaque fil d'attente de sorte que la somme de l'ensemble des crédits d'émission attribués soit inférieure ou égale à Q. Cela permet notamment d'assurer un meilleur service pour les flux non-privilégié.

Ainsi, par exemple, lorsqu'un segment de conduit correspondant à l'une des liaisons 14 de la plateforme 12A présente une capacité de transmission non-utilisée par les flux privilégiés, les crédits d'émission sont attribués par le gestionnaire de vidage 53 de sorte qu'au moins certains des flux non-privilégiés utilisent cette capacité de transmission non-utilisée.

Cela peut être fait localement, c'est-à-dire lorsque le gestionnaire de vidage 53 est intégré dans l'un des modules de gestion locaux 34, en relation avec les flux privilégiés issus d'un même domaine de sécurité ou globalement, c'est-à-dire lorsque le gestionnaire de vidage 53 est intégré dans le module de gestion global 24, en relation avec les flux privilégiés issus de domaines de sécurité différents.

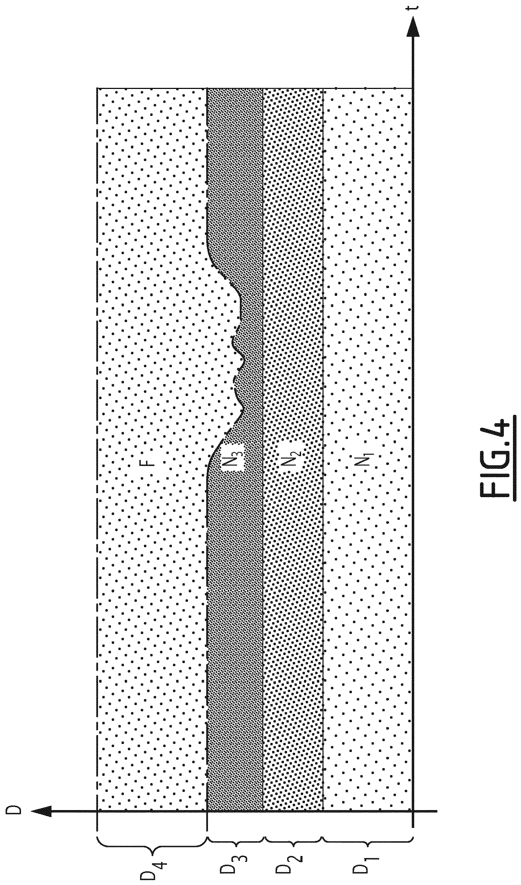

Un exemple d'implémentation de ce deuxième cas est illustré sur la figure 4.

Ainsi, en référence à cette figure, un débit D₁ est réservé pour les flux privilégiés issus du domaine de sécurité N₁, un débit D₂ est réservé pour les flux privilégiés issus du domaine de sécurité N₂, un débit D₃ est réservé pour les flux privilégiés issus du domaine de sécurité N₃ et un débit D₄ présente alors un débit restant pour transmettre l'ensemble des flux non-privilégiés F.

Lorsque le gestionnaire de vidage 53 détermine qu'au moins l'un des débits réservés D₁ à D₃ n'est pas utilisé entièrement par les flux privilégiés correspondants, il peut utiliser cette capacité restante pour l'attribuer aux flux non-privilégiés F.

Ainsi, dans l'exemple de la figure 4, le débit réservé D₃ pour les flux privilégiés issus du domaine de sécurité N₃ n'est pas utilisé entièrement, et le débit D₄ des flux non-privilégiés F est donc augmenté temporairement pour utiliser toute la capacité de la liaison 14 correspondante.

Cette augmentation du débit D₄ est effectuée par le gestionnaire de vidage 53 en augmentant de manière adaptée les crédits *qᵢ* accordés aux flux non-privilégiés F.

Il est possible également de réajuster entre eux les débits réservés par des flux privilégiés au sein d'un même domaine de sécurité.

Cela peut être fait localement ou globalement.

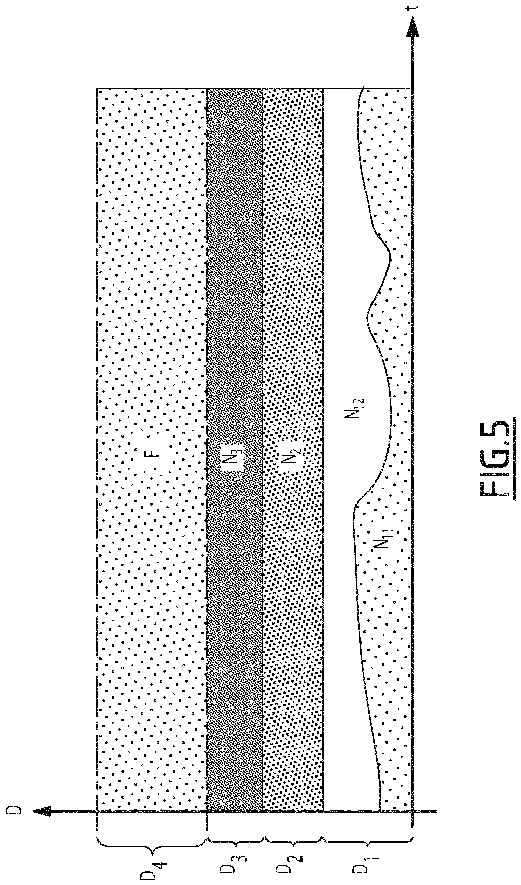

La figure 5 illustre un exemple d'une telle implémentation par le gestionnaire de vidage 53 intégré dans le module de gestion global 24.

Ainsi, comme dans le cas précédent, un débit D₁ est réservé pour les flux privilégiés issus du domaine de sécurité N₁, un débit D₂ est réservé pour les flux privilégiés issus du domaine de sécurité N₂, un débit D₃ est réservé pour les flux privilégiés issus du domaine de sécurité N₃ et un débit D₄ présente alors un débit restant pour transmettre l'ensemble des flux non-privilégiés F.

En qui concerne le domaine de sécurité N₁, initialement, par exemple une tranche de 30% du débit D1 est réservée pour le flux N₁₁ et une tranche de 70% du débit D1 est réservée pour le flux N₁₂.

Le gestionnaire de vidage 53 est apte alors à réajuster ces répartitions entre les flux N₁₁ et N₁₂ au cours du temps en fonction de l'utilisation réele de la tranche correspondante par chacun des flux.

Comme dans le cas précédant, ce réajustement est effectué en affectant de manière adaptée les crédits *qᵢ* à ces flux N₁₁ ou N₁₂.

Avantageusement, selon l'invention, le gestionnaire de vidage 53 est apte en outre à recevoir une information de débit réel de chaque liaison 14 associée et à déterminer la fréquence de vidage et la capacité de vidage de chaque file d'attente en fonction en outre de chacun de ces débits réels. Cette information de débit réel est fournie par les moyens 40 expliqués précédemment.

Enfin, il est à noter que seule la partie d'émission des flux de données des modules de gestion 24, 34 a été expliquée en détail.

La partie de réception présente par exemple une structure similaire. Toutefois, à la réception, il n'est pas nécessaire de traiter les flux privilégiés d'une manière particulière étant donné que leur qualité de service a déjà été assurée lors de l'émission par la plateforme correspondante.

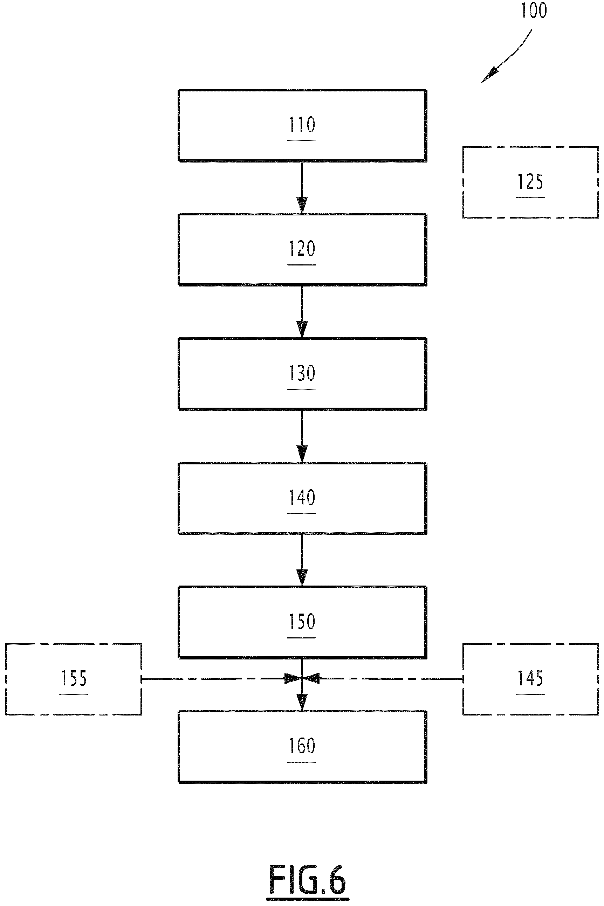

Le procédé de construction de nouvelles règles d'échanges 100 sera désormais expliqué en référence à la figure 6 présentant un organigramme de ses étapes.

Comme indiqué précédemment, ce procédé est mis en œuvre par le module central 23 de l'une des plateformes de communication 12A à 12N. Par la suite, il sera considéré que ce procédé 100 est mis en œuvre par le module central 23 de la plateforme de communication 12A. Cette plateforme 12A sera alors appelée par la suite plateforme courante et ce module central sera appelé module courant.

Il est par ailleurs considéré qu'avant la mise en œuvre du procédé 100, chaque plateforme de communication fonctionne conformément à un plan de communication en vigueur. Le but du procédé 100 est donc de générer un nouveau plan de communication pour l'ensemble des plateformes lors qu'au moins une nouvelle spécification de plan est reçue.

Lors d'une étape initiale 110, le module central 23 acquiert au moins une nouvelle spécification de flux définissant un nouveau flux de données à émettre par la plateforme courante.

Différentes possibilités de réalisation de cette étapes 110 sont possibles en fonction du rôle de la plateforme courante 12A.

Selon une première possibilité, cette nouvelle spécification est acquise à partir d'une nouvelle spécification de plan soumise à la plateforme 12A.

La soumission de cette nouvelle spécification déclenche la mise en œuvre du procédé 100 et dans ce cas, le module central 23 de cette plateforme est alors appelé module initiateur.

En particulier, une spécification de plan comprend une liste de spécifications de flux, chaque spécification de flux définissant un flux de données à produire ou à recevoir par la plateforme courante en tant qu'un flux privilégié.

Cette spécification est notamment soumise par un opérateur via par exemple une interface homme-machine associée au module central 23.

Pour construire cette spécification, l'opérateur dispose par exemple d'une interface adaptée.

Cette interface peut par exemple comprendre une liste de flux de données utilisables par la plateforme 12A et pour chaque flux, un indicateur de réservation correspondant à la part souhaitée dans la masse des données traitées par la plateforme. Un indicateur de priorité indiquant la priorité des flux peut être également associé à chaque flux.

Ainsi, l'opérateur a une possibilité de modifier chacun de ces indicateurs en déplaçant par exemple un curseur sur une échelle associée à cet indicateur.

Selon d'autres exemples de réalisation, la spécification de plan est soumise par un système embarqué, un système extérieur ou alors une autorité extérieure.

Selon une deuxième et une troisième possibilités de réalisation de l'étape 110, la mise en œuvre du procédé 100 est déjà déclenchée par le module central d'une autre plateforme de communication 12B à 12N. Le module central de cette autre plateforme est alors appelé module initiateur.

Dans ce cas, selon la deuxième possibilité, le module central 23 de la plateforme 12A reçoit de la part du module initiateur un message d'export comprenant au moins une spécification de flux définissant un flux de données à produire par la plateforme courante. Le module central 23 est alors appelé module importateur.

Le message d'export est envoyé par le module initiateur à la suite de la mise en œuvre d'une étape 125 de transmission de ce message d'export. Cette étape 125 peut être également mise en œuvre par le module 23 de la plateforme courante en relation avec les flux dont elle est la destination. Dans ce cas, le module courant est également un module initiateur en relation avec ces flux. Une telle étape 125 peut être mise en œuvre par la module courant par exemple en parallèle avec l'étape 110 ou 120.

Selon la troisième possibilité, le module central 23 de la plateforme 12A reçoit une demande de relayage d'un flux de données de la part du module central, dit module demandeur, de l'une des plateformes de communication raccordée directement à la plateforme courante. Cette demande de relayage comprenant la spécification de chaque flux devant être relayé par la plateforme courante 12A. Dans ce cas, le module central 23 est appelé module de relai.

Lors de l'étape 120 suivante, le module central 23 détermine une spécification d'émission. Cette spécification d'émission est formée par chaque spécification de flux issue du plan de communication en vigueur de la plateforme 12A et de le ou de chaque nouvelle spécification acquise.

Lorsque le module central 23 est un module initiateur, ce module central 23 inclut donc dans sa spécification d'émission chaque spécification de flux issue du plan de communication en vigueur et chaque spécification de flux de la spécification de plan soumise lors de l'étape 110.

En outre, dans ce cas, le module central 23 supprime de sa spécification d'émission chaque spécification de flux issue du plan de communication en vigueur et définissant un flux de données dont la plateforme courante est la source.

Lorsque le module central 23 est un module importateur, ce module central 23 inclut donc dans sa spécification d'émission chaque spécification de flux issue du plan de communication en vigueur et chacune des spécifications de flux issues du message d'export acquis lors de l'étape 110.

En outre, dans ce cas, le module central 23 supprime de sa spécification d'émission chaque spécification de flux issue du plan de communication en vigueur et transmise précédemment via un message d'export issu du module initiateur.

Lorsque le module central 23 est un module de relai, ce module central 23 inclut donc dans sa spécification d'émission chaque spécification de flux issue du plan de communication en vigueur et chacune des spécifications de flux issues de la demande de relayage reçue lors de l'étape 110.

En outre, dans ce cas, le module central 23 supprime de sa spécification d'émission chaque spécification de flux issue du plan de communication en vigueur et transmise précédemment via une demande de relayage issue du module demandeur.

Lors de l'étape 130 suivante, le module central 23 met en œuvre le procédé de construction et de maintien de conduits de transmission 200 permettant de construire pour chaque famille de flux de la spécification d'émission un conduit de transmission entre la source et la destination de chacun des flux de cette famille.

Ce procédé de construction et de maintien de conduits de transmission 200 sera expliqué en détail par la suite.

L'étape 140 suivante est mise en œuvre par le module central 23 pour chaque flux de données défini par la spécification d'émission dont la destination n'est pas raccordée par l'une des liaisons 14 associées à la plateforme courante.

Autrement dit, dans ce cas, la destination du flux correspondant n'est pas raccordée directement à la plateforme courante et il est nécessaire de passer par au moins une plateforme de relai pour transmettre ce flux.

En particulier, lors de cette étape, le module central 23 transmet une demande de relayage de ce flux au module central, dit module de relai, de l'une des plateformes de communication raccordée directement à la plateforme courante. Cette plateforme correspondant au module de relai est déterminée conformément au conduit de transmission construit lors de l'étape précédente.

La demande de relayage comprend la spécification du flux pour lequel le relayage est demandé.

Ensuite, le module central 23 reçoit un rapport de relayage relatif à l'admissibilité de ce flux de la part de la plateforme de relai.

En particulier, un tel flux est admissible lorsque la plateforme de relai a la capacité de l'émettre en tant qu'un flux privilégié.

Le rapport de relayage est alors généré par le module central de la plateforme de relai à la suite de la mise en œuvre d'une étape 145 correspondante par le module central 23 de la plateforme de relai. Une telle étape 145 peut être également mise en œuvre par le module central 23 de la plateforme courante pour des flux pour lesquels cette plateforme présente une plateforme de relai. Dans ce cas, cette étape 145 est par exemple mise en œuvre après l'étape 150 expliquée en détail ci-dessous.

Lors de l'étape 150, le module central 23 de la plateforme courante 12A vérifie l'admissibilité de chaque flux de données défini par sa spécification d'émission.

En particulier, un flux de données issu de la spécification d'émission est admissible lorsqu'il peut être émis dans le conduit correspondant conformément à la qualité de service définie dans sa spécification.

Lorsqu'une spécification de flux définit un débit élastique, la qualité de service du flux correspondant est respectée lorsque ce flux peut être transmis avec au moins le débit minimal associé.

Outre l'étape 145, après l'étape 150, le module central 23 peut mettre également en œuvre une étape 155 lors de laquelle il génère et envoie un rapport d'admission à la suite d'une vérification de l'admissibilité de chaque flux dont la spécification a été reçue avec le message d'export. Ce rapport est alors envoyé à la plateforme de destination du flux correspondant.

Lors de l'étape finale 160, le module central 23 de la plateforme courante 12 construit un nouveau plan de communication de la plateforme courante 12 en y incluant les spécifications de tous les flux de données définis par la spécification d'émission dont l'admissibilité est confirmée.

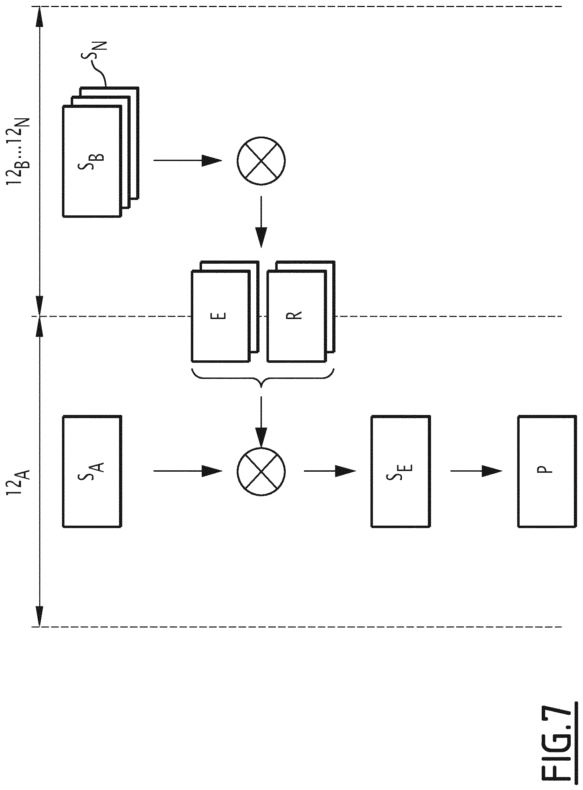

La mise en œuvre du procédé 100 peut être comprise plus facilement en référence à la figure 7.

Dans l'exemple de cette figure, il est considéré que le module 23 de la plateforme courante 12A est un module initiateur qui reçoit une spécification de plan S_{A}. Cette spécification S_{A} est par exemple soumise à ce module 23 par l'utilisateur, comme cela a été expliqué précédemment.

Les autres modules centraux des autres plateformes de communication 12B à 12N peuvent donc également recevoir des nouvelles spécifications de plan S_{B} à S_{N} et génèrent des demandes de relayage R et des demandes d'export E correspondantes.

Ces demandes R et E sont ensuite transmises au module central 23 de la plateforme courante 12A qui les combine avec sa spécification de plan S_{A} pout obtenir une spécification d'émission SE.

Enfin, ce module 23 génère un plan de communication P en y incluant chaque flux admissible à partir de sa spécification d'émission SE.

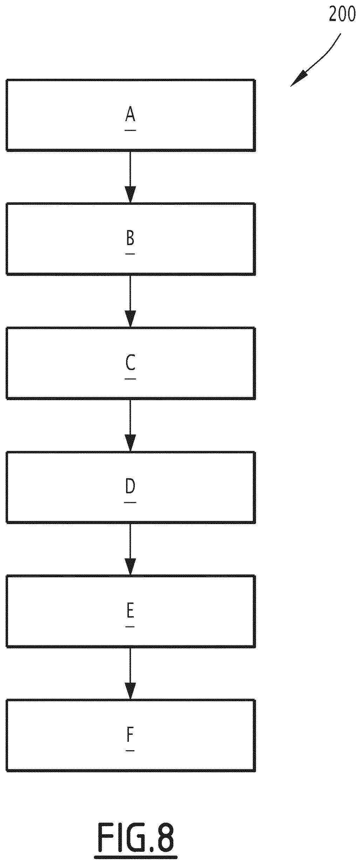

Le procédé de construction et de maintien de conduits de transmission 200 sera désormais expliqué en référence à la figure 8 présentant un organigramme de ses étapes.

Comme expliqué précédemment, ce procédé 200 est mis en œuvre lors de l'étape 130 du procédé de construction 100 par le module central 23 de la plateforme courante 12A et permet d'établir un conduit de transmission pour chaque famille de flux.

Lors de l'étape A), le module 23 construit un segment de conduit dans la liaison 14 entre la plateforme courante 12A et une plateforme de communication, dite plateforme suivante, pour chaque famille de flux dont les flux sont destinés à être produits par la plateforme courante 12A.

En particulier, pour ce faire, le module central 23 établit d'abord une liste de liaisons licites à partir de la plateforme courante 12A selon un ordre de préférence de ces liaisons licites.

Une liaison est considérée licite lorsqu'elle fait partie d'au moins un chemin raccordant la plateforme courante 12A et la plateforme de destination des flux de la famille en traversant des plateformes de relai, dont le nombre est inférieur ou égal à un nombre de bonds maximal prédéterminé.

Ainsi, dans l'exemple de la figure 1, lorsqu'il est nécessaire de construire un conduit de transmission entre la plateforme 12A et la plateforme 12N, deux chemins peuvent par exemple être considérés.

Un premier chemin par une seule plateforme de relai 12B et un deuxième chemin passe d'abord par la plateforme de relai 12C et puis, par la plateforme de relai 12B.

Dans ce cas, si le nombre de bonds maximal est égal à 2, les deux liaisons 14 associées à plateforme 12A seront considérées comme licites. Si, en revanche, ce nombre de bonds maximal est égal à 1, seule la liaison 14 raccordant la plateforme 12A à la plateforme 12B sera considérée comme licite.

L'ordre de préférence des liaisons licites est par exemple déterminé suivant le nombre de plateformes de relai utilisables dans les chemins comprenant ces liaisons.

Ainsi, dans le précédent exemple avec le nombre de bonds maximal égal à 2, la liaison 14 raccordant les plateformes 12A et 12B sera considérée comme préférée par rapport à la liaison 14 raccordant les plateformes 12A et 12C.

Enfin, lorsque deux liaisons licites font partie de deux chemins différents pour une même famille de flux, la liaison ayant un plus grand débit est prioritaire dans l'ordre de préférence défini pour ces deux liaison licites.

Puis, le module central 23 classe l'ensemble des flux de données destinés à être émis par la plateforme courante 12A selon un ordre de priorité déterminé par une priorité associée à chacun des flux de données.

Enfin, le module central 23 affecte les flux de données en choisissant pour chaque flux de données suivant l'ordre de priorité, une capacité dans une liaison parmi la liste de liaisons licites suivant l'ordre de préférence.

L'étape B) est mise en œuvre par le module central 23 lorsque les flux de données d'une famille de flux destinés à être émis par la plateforme courante 12A n'ont pas pour destination la plateforme suivante.

Dans ce cas, le module central 23 envoie au module central de la plateforme suivante une requête de prolongation du conduit de transmission de cette famille de flux par un segment de conduit construit dans la liaison entre la plateforme suivante et une plateforme de communication autre que la plateforme courante.

Cette plateforme suivante construit donc un segment suivant du conduit de manière analogue à celle expliquée en référence à l'étape A) ci-dessus.

Lorsqu'un dernier segment de conduit relatif à une famille de données atteint la plateforme de destination des flux de cette famille, le module central 23 détermine lors de l'étape C) un tracé et un débit de bout en bout du conduit de transmission correspondant.

Enfin lors de l'étape D), le module central 23 associe le conduit de transmission dont le tracé et le débit ont été analysés à la transmission de la famille de flux correspondante lorsque chaque segment de conduit permet de transmettre chaque flux de données de cette famille de flux avec une qualité de service déterminée par la spécification de ce flux.

Pour ce faire, le module courant 23 détermine d'abord une liste de caractéristiques de qualité de service sur chaque segment du conduit de transmission et en déduit un indicateur global de qualité de service pour le conduit de transmission correspondant.

Puis, il détermine une liste de flux de données susceptibles d'utiliser ce conduit de transmission conformément à son indicateur global.

Avantageusement, le procédé 200 comprend en outre l'étape E) correspondant à une étape de maintenance des conduits existants.

Cette étape E) est par exemple mise en œuvre indépendamment des autres étapes A) à D) lorsqu'elles ont été mises en œuvre au moins une fois. Ainsi, elle peut être mise en œuvre lors du fonctionnement de l'architecture 10.

Lors de cette étape E), le module courant 23 envoie une synthèse de conduit pour chaque conduit de transmission à chaque module central de l'ensemble des plateformes de relai correspondant à ce conduit de transmission à l'extension d'une période temporelle prédéterminée.

Cette synthèse permettent alors aux modules centraux des plateformes de communication correspondantes de conclure que le conduit de transmission correspondant est toujours utilisé.

Ainsi, lorsqu'une plateforme de relai ne reçoit pas une synthèse de conduit relative à un conduit de transmission au bout de la période temporelle prédéterminée, le module central correspondant en conclut que le conduit n'est plus utilisé et le détruit.

On conçoit alors que la présente invention présente un certain nombre d'avantages.

Tout d'abord, il est clair que l'architecture telle que décrite ci-dessous permet de définir des règles d'échanges parmi une pluralité de plateformes de communication.

Ces règles sont négociées entre l'ensemble de ces plateformes ce qui permet d'identifier de manière sûre l'ensemble des flux devant être traités comme privilégiés et d'assurer leur qualité de service.

En outre, ces règles peuvent être modifiées de manière dynamique et de manière automatique par les plateformes elles-mêmes.

Cela est particulièrement avantageux lorsque la formation d'engins mobiles évolue ou lorsque les conditions de leur opération changent.

Enfin, ces règles peuvent être changées à l'initiative d'un utilisateur qui peut exprimer de manière particulièrement simple les besoins de la plateforme de communication correspondante.

## Revendications

1. Procédé de construction (100) de nouvelles règles d'échanges dans une architecture d'échanges (10) de flux de données dans une formation d'engins mobiles, l'architecture d'échanges (10) comprenant une pluralité de plateformes de communication (12A,...,12N) et des liaisons (14) raccordant ces plateformes de communication (12A,..., 12N) entre elles, chaque plateforme de communication (12A,...,12N) étant associée à l'un des engins mobiles ou à un centre de commandement et comprenant un module central (23), chaque plateforme (12A,...,12N) émettant et recevant des flux de données conformément à un plan de communication en vigueur, le plan de communication en vigueur comprend une liste de spécifications de flux, chaque spécification de flux définissant un flux de données à émettre par la plateforme de communication correspondante en tant qu'un flux privilégié, chaque spécification comprenant une qualité de service du flux correspondant ;
le procédé de construction (100) étant mis en œuvre par le module central (23), dit module courant, de l'une des plateformes de communication (12A,...,12N), dite plateforme courante, et comprenant les étapes suivantes :
- acquisition (110) d'au moins une nouvelle spécification de flux définissant un nouveau flux de données à émettre par la plateforme courante ;
- détermination (120) d'une spécification d'émission comprenant l'inclusion dans la spécification d'émission de chaque spécification de flux issue du plan de communication en vigueur et de la ou de chaque nouvelle spécification acquise ;
- pour chaque flux de données défini par la spécification d'émission dont la plateforme de communication (12A,...,12N) destinataire n'est pas raccordée directement à la plateforme courante :
+ transmission (140) d'une demande de relayage de ce flux au module central (23), dit module de relai, de l'une des plateformes de communication (12A,...,12N) raccordée directement à la plateforme courante, la demande de relayage comprenant la spécification de ce flux ;
+ réception (140) d'un rapport de relayage relatif à l'admissibilité de ce flux ;
- vérification (150) de l'admissibilité de chaque flux de données défini par la spécification d'émission ;
- construction (160) d'un nouveau plan de communication de la plateforme courante en y incluant les spécifications de tous les flux de données définis par la spécification d'émission dont l'admissibilité est confirmée.

2. Procédé de construction (100) selon la revendication 1, dans lequel l'étape d'acquisition (110) d'au moins une nouvelle spécification de flux comprend la réception d'une demande de relayage d'un flux de données de la part du module central (23), dit module demandeur, de l'une des plateformes de communication (12A,...,12N) raccordée directement à la plateforme courante, la demande de relayage comprenant une spécification de ce flux ;
l'étape de détermination (120) de la spécification d'émission comprenant l'inclusion de la spécification de ce flux dans la spécification d'émission ;
le procédé de construction (100) comprenant en outre l'étape de génération (145) d'un rapport de relayage à la suite d'une vérification de l'admissibilité de ce flux.

3. Procédé de construction (100) selon la revendication 2, dans lequel l'étape de détermination (120) de la spécification d'émission comprend la suppression de la spécification d'émission de chaque spécification de flux issue du plan de communication en vigueur et transmise précédemment via une demande de relayage issue du module demandeur.

4. Procédé de construction (100) selon l'une quelconque des revendications précédentes, dans lequel l'étape d'acquisition (110) d'au moins une nouvelle spécification de flux comprend la réception d'un message d'export de la part du module central (23), dit module initiateur, de l'une des plateformes de communication (12A,...,12N), le message d'export comprenant au moins une spécification de flux définissant un flux de données à émettre par la plateforme courante ;
l'étape de détermination (120) de la spécification d'émission comprenant l'inclusion de la ou de chacune desdits spécifications de flux dans la spécification d'émission ;
le procédé de construction (100) comprenant en outre l'étape de génération (155) d'un rapport d'admission à la suite d'une vérification de l'admissibilité de ce ou de ces flux.

5. Procédé de construction (100) selon la revendication 4, dans lequel l'étape de détermination (120) de la spécification d'émission comprend la suppression de la spécification d'émission de chaque spécification de flux issue du plan de communication en vigueur et transmise précédemment via un message d'export issu du module initiateur.

6. Procédé de construction (100) selon l'une quelconque des revendications précédentes, dans lequel l'étape d'acquisition (110) d'au moins une nouvelle spécification de flux comprend l'acquisition d'une spécification de plan, la spécification de plan comprenant une liste de spécifications de flux, chaque spécification de flux définissant un flux de données à émettre ou à recevoir par la plateforme courante en tant qu'un flux privilégié ;
l'étape de détermination (120) de la spécification d'émission comprenant l'inclusion de chaque spécification de flux de la spécification de plan.

7. Procédé de construction (100) selon la revendication 6, dans lequel l'étape de détermination (120) de la spécification d'émission comprend la suppression de la spécification d'émission de chaque spécification de flux issue du plan de communication en vigueur et définissant un flux de données dont la plateforme courante est une source.

8. Procédé de construction (100) selon la revendication 7, comprenant en outre l'étape de transmission (125) d'un message d'export au module central (23), dit module importateur, d'au moins l'une des plateformes de communication (12A,...,12N), le message d'export comprenant une liste de spécifications de flux, chaque spécification de flux définissant un flux à recevoir par la plateforme courante et dont la plateforme de communication (12A,...,12N) du module importateur est une source.

9. Procédé de construction (100) selon l'une quelconque des revendications 6 à 8, dans lequel la spécification de plan est introduite par un opérateur via une interface homme-machine connectée au module courante.

10. Procédé de construction (100) selon l'une quelconque des revendications précédentes, dans lequel chaque spécification de flux définissant un flux de données comprend :
- un identifiant de ce flux ;
- une source de ce flux correspondant à la plateforme de communication (12A,...,12N) destinée à générer et à émettre ce flux ;
- une destination de ce flux correspondant à la plateforme de communication (12A,...,12N) destinées à recevoir ce flux ;
- un débit avec lequel ce flux est à transmettre entre la source et la destination.

11. Procédé de construction (100) selon la revendication 10, dans lequel l'admissibilité d'un flux de données est confirmée par le module central (23) de l'une des plateformes de communication (12A,...,12N), lorsqu'il est possible de réserver un débit de transmission pour ce flux conformément à sa spécification, sur au moins un conduit de bout en bout raccordant cette plateforme de communication (12A,...,12N) à la destination de ce flux.

12. Module central (23) pour une architecture d'échanges (10) de flux de données dans une formation d'engins mobiles, l'architecture d'échanges (10) comprenant une pluralité de plateformes de communication (12A,...,12N) et des liaisons (14) raccordant ces plateformes de communication (12A,...,12N) entre elles, chaque plateforme de communication (12A,...,12N) étant associée à l'un des engins mobiles ou à un centre de commandement ;
le module central (23) étant **caractérisé en ce qu'**il comprend des moyens techniques configurés pour mettre en œuvre les étapes du procédé de construction (100) selon l'une quelconque des revendications précédentes.

## Patentansprüche

1. Verfahren zum Aufbau (100) neuer Austauschregeln in einer Austauscharchitektur (10) für Datenströme in einer Formation von mobilen Maschinen, die Austauscharchitektur (10) umfassend eine Vielzahl von Kommunikationsplattformen (12A,...,12N) und Verbindungen (14), die diese Kommunikationsplattformen (12A,...,12N) miteinander verbinden, wobei jede Kommunikationsplattform (12A,...,12N) mit einem der mobilen Maschinen oder mit einer Kommandozentrale verbunden ist und ein Zentralmodul (23) umfasst, jede Plattform (12A,...,12N) Datenströme gemäß einem gültigen Kommunikationsplan sendet und empfängt, wobei der gültige Kommunikationsplan eine Liste von Stromspezifikationen umfasst, wobei jede Stromspezifikation einen Datenstrom definiert, der von der entsprechenden Kommunikationsplattform als ein privilegierter Strom gesendet werden soll, wobei jede Spezifikation eine Dienstqualität des entsprechenden Stroms umfasst;
wobei das Aufbauverfahren (100) von dem Zentralmodul (23), dem sogenannten aktuellen Modul, einer der Kommunikationsplattformen (12A,...,12N), der sogenannten aktuellen Plattform, durchgeführt wird und die folgenden Schritte umfasst:
- Erfassen (110) von mindestens einer neuen Stromspezifikation, die einen neuen Datenstrom definiert, der von der aktuellen Plattform ausgegeben werden soll;
- Bestimmen (120) einer Sendespezifikation, umfassend das Einbeziehen jeder Stromspezifikation aus dem gültigen Kommunikationsplan und der oder jeder neu erfassten Spezifikation in die Sendespezifikation;
- für jeden durch die Sendespezifikation definierten Datenstrom, dessen empfangende Kommunikationsplattform (12A,...,12N) nicht direkt mit der aktuellen Plattform verbunden ist:
+ Übertragen (140) einer Weiterleitungsanforderung dieses Stroms an das Zentralmodul (23), bezeichnet als Weiterleitungsmodul, einer der Kommunikationsplattformen (12A,...,12N), die direkt mit der aktuellen Plattform verbunden ist, die Weiterleitungsanforderung umfassend die Spezifikation dieses Stroms;
+ Empfangen (140) eines Weiterleitungsberichts über die Zulässigkeit dieses Stroms;
- Überprüfen (150) der Zulässigkeit von jedem Datenstrom, der durch die Übertragungsspezifikation definiert ist;
- Aufbauen (160) eines neuen Kommunikationsplans der aktuellen Plattform unter Einbeziehung der Spezifikationen aller Datenströme, die durch die Sendespezifikation definiert sind, deren Zulässigkeit bestätigt ist.

2. Aufbauverfahren (100) nach Anspruch 1, wobei der Erfassungsschritt (110) mindestens einer neuen Stromspezifikation das Empfangen einer Weiterleitungsanforderung eines Datenstroms von dem Zentralmodul (23), bezeichnet als Anforderungsmodul, einer der Kommunikationsplattformen (12A,....,12N), die direkt mit der aktuellen Plattform verbunden ist, umfasst, die Weiterleitungsanforderung umfassend eine Spezifikation dieses Datenstroms;
der Bestimmungsschritt (120) der Sendespezifikation umfassend das Einbeziehen der Spezifikation dieses Stroms in die Sendespezifikation;
das Aufbauverfahren (100) ferner umfassend den Erzeugungsschritt (145) eines Weiterleitungsberichts nach einer Überprüfung der Zulässigkeit dieses Stroms.

3. Aufbauverfahren (100) nach Anspruch 2, wobei der Bestimmungsschritt (120) der Sendespezifikation das Entfernen der Sendespezifikation aus jeder Stromspezifikation umfasst, die aus dem gültigen Kommunikationsplan stammt und zuvor über eine Weiterleitungsanforderung von dem anfordernden Modul gesendet wurde.

4. Aufbauverfahren (100) nach einem der vorherigen Ansprüche, wobei der Erfassungsschritt (110) mindestens einer neuen Stromspezifikation das Empfangen einer Exportnachricht von dem Zentralmodul (23), bezeichnet als Initiatormodul, einer der Kommunikationsplattformen (12A,...,12N) umfasst, die Exportnachricht mindestens umfassend eine Stromspezifikation, die einen von der aktuellen Plattform zu sendenden Datenstrom definiert;
der Bestimmungsschritt (120) der Sendespezifikation umfassend das Einbeziehen der oder jeder der genannten Stromspezifikationen in die Sendespezifikation;
das Aufbauverfahren (100) ferner umfassend den Erzeugungsschritt (155) eines Zulassungsberichts nach einer Überprüfung der Zulässigkeit dieses oder dieser Ströme.

5. Aufbauverfahren (100) nach Anspruch 4, wobei der Bestimmungsschritt (120) der Sendespezifikation das Entfernen der Sendespezifikation aus jeder Stromspezifikation umfasst, die aus dem gültigen Kommunikationsplan stammt und zuvor über eine Exportnachricht aus dem Initiatormodul übertragen wurde.

6. Aufbauverfahren (100) nach einem der vorherigen Ansprüche, wobei der Erfassungsschritt (110) von mindestens einer neuen Stromspezifikation das Erfassen einer Planspezifikation umfasst, die Planspezifikation umfassend eine Liste von Stromspezifikationen enthält, wobei jede Stromspezifikation einen von der aktuellen Plattform zu sendenden oder zu empfangenden Datenstrom als einen privilegierten Strom definiert;
der Bestimmungsschritt (120) der Übertragungsspezifikation umfassend das Einbeziehen jeder Stromspezifikation der Planspezifikation umfasst.

7. Aufbauverfahren (100) nach Anspruch 6, wobei der Bestimmungsschritt (120) der Sendespezifikation das Entfernen der Sendespezifikation aus jeder Stromspezifikation umfasst, die aus dem aktuellen Kommunikationsplan stammt und einen Datenstrom definiert, für den die aktuelle Plattform eine Quelle ist.

8. Aufbauverfahren (100) nach Anspruch 7, ferner umfassend den Schritt eines Übertragens (125) einer Exportnachricht an das Zentralmodul (23), bezeichnet als Importeurmodul, von mindestens einer der Kommunikationsplattformen (12A,...,12N) umfasst, die Exportnachricht umfassend eine Liste von Stromspezifikationen, wobei jede Stromspezifikation einen Strom definiert, der von der aktuellen Plattform empfangen werden soll und für den die Kommunikationsplattform (12A,...,12N) des Importeurmoduls eine Quelle ist.

9. Aufbauverfahren (100) nach einem der Ansprüche 6 bis 8, wobei die Planspezifikation von einem Bediener über eine Mensch-Maschine-Schnittstelle, die mit dem aktuellen Modul verbunden ist, eingegeben wird.

10. Aufbauverfahren (100) nach einem der vorherigen Ansprüche, wobei jede Stromspezifikation, die einen Datenstrom definiert, Folgendes umfasst:
- eine Kennung dieses Stroms;
- eine Quelle dieses Stroms, die der Kommunikationsplattform (12A,...,12N) entspricht, die dazu bestimmt ist, diesen Strom zu erzeugen und zu senden;
- ein Ziel dieses Stroms, das der Kommunikationsplattform (12A,...,12N) entspricht, die dazu bestimmt ist, diesen Strom zu empfangen;
- eine Rate, mit der dieser Strom zwischen Quelle und Ziel übertragen werden soll.

11. Aufbauverfahren (100) nach Anspruch 10, wobei die Zulässigkeit eines Datenstroms von dem Zentralmodul (23) einer der Kommunikationsplattformen (12A,...,12N) bestätigt wird, wenn es möglich ist, eine Übertragungsrate für diesen Strom gemäß seiner Spezifikation auf mindestens einer Ende-zu-Ende-Leitung, die diese Kommunikationsplattform (12A, ..., 12N) mit dem Ziel dieses Stroms verbindet, zu reservieren.

12. Zentralmodul (23) für eine Austauscharchitektur (10) von Datenströmen in einer Formation von mobilen Maschinen, die Austauscharchitektur (10) umfassend eine Vielzahl von Kommunikationsplattformen (12A,...,12N) und Verbindungen (14), die diese Kommunikationsplattformen (12A,...,12N) miteinander verbinden, wobei jede Kommunikationsplattform (12A,...,12N) mit einer der mobilen Maschinen oder mit einer Kommandozentrale verbunden ist;
wobei das Zentralmodul (23) **dadurch gekennzeichnet ist, dass** es technische Einrichtungen umfasst, die konfiguriert sind, um die Schritte des Aufbauverfahrens (100) nach einem der vorherigen Ansprüche durchzuführen.

## Claims

1. A method (100) for constructing new exchange rules in an exchange architecture (10) for data streams in a formation of mobile machines, the exchange architecture (10) comprising a plurality of communication platforms (12A,...,12N) and links (14) connecting these communication platforms (12A,...,12N) to one another, each communication platform (12A,...,12N) being associated with one of the mobile machines or with a command centre and comprising a central module (23), each platform (12A,......,12N) transmitting and receiving data streams in accordance with a current communication plan, the current communication plan comprises a list of stream specifications, each stream specification defining a data stream to be transmitted by the corresponding communication platform as a privileged stream, each specification comprising a quality of service of the corresponding stream;
the construction method (100) being implemented by the central module (23), referred to as the current module, of one of the communication platforms (12A, ..., 12N), referred to as the current platform, and comprising the following steps:
- acquiring (110) of at least one new stream specification defining a new data stream to be transmitted by the current platform;
- determining (120) a transmission specification comprising the inclusion, in the transmission specification, of each stream specification from the current communication plan and the or each new specification acquired;
- for each data stream defined by the transmission specification whose destination communication platform (12A,...,12N) is not connected directly to the current platform:
+ transmitting (140) a relay request for this stream to the central module (23), known as the relay module, of one of the communication platforms (12A, ..., 12N) connected directly to the current platform, the relay request comprising the specification of that stream;
+ receiving (140) a relay report relating to the eligibility of that stream;
- verifying (150) the eligibility of each data stream defined by the transmission specification;
- constructing (160) of a new communication plan for the current platform, including the specifications of all the data streams defined by the emission specification whose eligibility is confirmed.

2. The construction method (100) according to claim 1, wherein the step (110) of acquiring at least one new stream specification comprises receiving a request to relay a data stream from the central module (23), referred to as the requesting module, from one of the communication platforms (12A,....,12N) connected directly to the current platform, the relay request comprising a specification of that stream;
the step of determining (120) the transmission specification comprising including the specification of that stream in the transmission specification;
the construction method (100) further comprising the step of generating (145) a relay report following a verification of the eligibility of that stream.

3. The construction method (100) according to claim 2, wherein the step of determining (120) the transmission specification comprises deleting from the transmission specification each stream specification originating from the current communication plan that was previously transmitted via a relay request originating from the requesting module.

4. The construction method (100) according to any one of the preceding claims, wherein the step of acquiring (110) at least one new stream specification comprises receiving an export message from the central module (23), referred to as the initiator module, of one of the communication platforms (12A,....,12N), the export message comprising at least one stream specification defining a data stream to be sent by the current platform;
the step of determining (120) the transmission specification comprising the inclusion of the or each specification of that stream in the transmission specification;
the construction method (100) further comprising the step of generating (155) an eligibility report following a verification of the eligibility of that or those streams.

5. The construction method (100) according to claim 4, wherein the step of determining (120) the transmission specification comprises deleting from the transmission specification each stream specification originating from the current communication plan that was previously transmitted via an export message originating from the initiator module.

6. The construction method (100) according to any one of the preceding claims, wherein the step of acquiring (110) at least one new stream specification comprises acquiring a plan specification, the plan specification comprising a list of stream specifications, each stream specification defining a data stream to be transmitted or received by the current platform as a privileged stream;
the step of determining (120) the transmission specification comprising the inclusion of each stream specification in the transmission specification.

7. The construction method (100) according to claim 6, wherein the step of determining (120) the transmission specification comprises deleting from the transmission specification each stream specification originating from the current communication plan and defining a data stream of which the current platform is a source.

8. The construction method (100) according to claim 7, further comprising the step of transmitting (125) an export message to the central module (23), known as the importer module, of at least one of the communication platforms (12A, ...12N), the export message comprising a list of stream specifications, each stream specification defining a stream to be received by the current platform and for which the communication platform (12A, ..., 12N) of the importer module is a source.

9. The construction method (100) according to any one of claims 6 to 8, wherein the plan specification is entered by an operator via a human-machine interface connected to the current module.

10. The construction method (100) according to any of the preceding claims, wherein each stream specification defining a data stream comprises:
- an identifier of that stream;
- a source of that stream corresponding to the communication platform (12A,...,12N) intended to generate and transmit that stream;
- a destination of that stream corresponding to the communication platform (12A,...,12N) intended to receive that stream;
- a rate at which this stream is to be transmitted between the source and destination.

11. The construction method (100) according to claim 10, wherein the eligibility of a data stream is confirmed by the central module (23) of one of the communication platforms (12A,...,12N), when it is possible to reserve a transmission rate for this stream in accordance with its specification, on at least one end-to-end channel connecting that communication platform (12A,...,12N) to the destination of that stream.

12. The central module (23) for a data stream exchange architecture (10) in a formation of mobile machines, the exchange architecture (10) comprising a plurality of communication platforms (12A,...,12N) and links (14) connecting these communication platforms (12A,...,12N) together, each communication platform (12A,...,12N) being associated with the one of the mobile machines or with a command centre;
the central module (23) being **characterised in that** it comprises technical means configured to implement the steps of the construction method (100) according to any one of the preceding claims.
